# EUROPEAN PATENT SPECIFICATION

(11) **EP 3 500 718 B1**
(45) Date of publication and mention of the grant of the patent: **07.06.2023**
(21) Application number: 17754775.9
(22) Date of filing: 09.08.2017
(51) Int. Cl.: E21B 17/01, F16L 1/12, H02G 3/04

(54) **BEND RESTRICTOR SEGMENT AND METHOD OF MANUFACTURE**
BIEGUNGSBEGRENZERSEGMENT UND VERFAHREN ZUR HERSTELLUNG
SEGMENT RESTRICTEUR DE COURBURE ET PROCÉDÉ DE FABRICATION

(30) Priority: 16.08.2016 GB 201614030
(43) Date of publication of application: 26.06.2019
(73) Proprietor: Tekmar Energy Limited, Darlington DL3 0UP (GB)
(72) Inventor: NOBLE, Ryan, Newton Aycliffe DL5 6AP (GB); SULLIVAN, Charlie, Newton Aycliffe DL5 6AR (GB)
(74) Representative: HGF
(86) International application number: PCT/GB2017/052341
(87) International publication number: WO 2018/033703

(56) References cited:
- WO-A1-2012/168702
- GB-A- 2 428 760
- GB-A- 2 463 940
- GB-A- 2 509 123
- US-A1- 2008 283 687
- US-A1- 2015 159 443

## Description

The present invention relates to a bend restrictor segment and a method of manufacturing a bend restrictor segment. A bend restrictor segment is a segment that is connectable to other segments to form a bend restrictor or vertebrate bend restrictor. In particular, but not exclusively, the present invention relates to a bend restrictor segment for defining a minimum radius of curvature of a portion of an elongate member.

### BACKGROUND

Elongate members, for example cables for the transmission of electricity, fibre optic cables, umbilicals, risers, flowlines or flexible pipes for transportation of production fluids are often used in subsea environments.

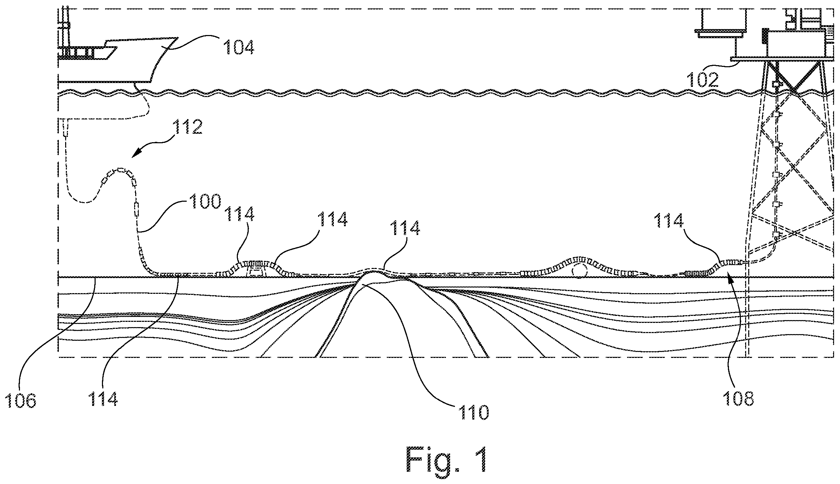

Fig. 1 illustrates an example of an installation of a cable 100 extending from an offshore structure 102 to a vessel 104. The cable 100 extends from the offshore structure 102 down towards the seabed 106, along the seabed 106, and up to the vessel 104 on the surface of the sea.

In such an arrangement the cable 100 may be subject to bending forces and/or tension forces. This may be at regions 108 where the cable 100 approaches or leaves the seabed 106, where there are undulations 110 along the seabed, or at regions where the cable assumes a wave configuration 112. Similar bending forces may also occur in a subsea flexible pipe.

Most elongate members have a minimum bend radius beyond which bending may cause damage. In some cases, damage caused from excessive bending may be irreparable. For example, in flexible pipes for transporting production fluids, excessive bending may cause the pipe to rupture resulting in spillage of production fluids from the pipe.

To help define a minimum bend radius and protect the elongate members from over bending, bend restrictors 114 are often used, specifically along portions of the elongate member that may be more susceptible to excessive bending forces.

Bend restrictors 114 may be formed from a plurality of bend restrictor segments, connected together in series and extending around the elongate member.

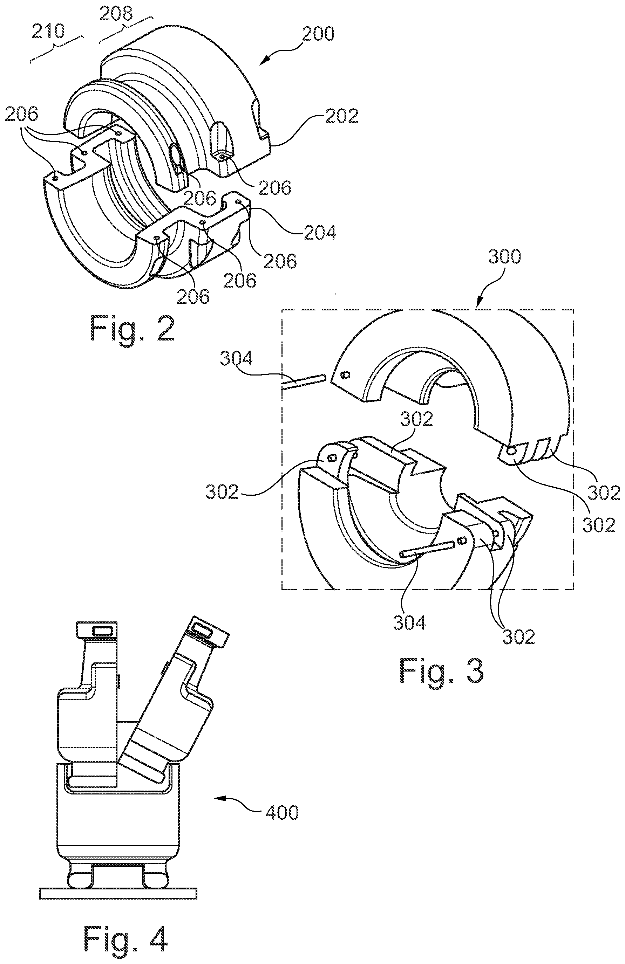

Figs. 2 to 4 illustrate known bend restrictor segments.

The bend restrictor segment 200 shown in fig. 2 includes two halves 202, 204 that can be connected together using six bolts extending through respective holes 206 in each half 202, 204. Each half 202, 204 includes a body portion 208 and a neck portion 210. Adjacent segments are positioned in series around an elongate member with the body portion 208 over the neck portion 210 of an adjacent segment so as to connect the adjacent segments together. Thus, at least the bolts positioned in the neck portion must be fastened before the next bend restrictor segment is added, because the bolts will not be accessible afterwards.

Fig. 3 illustrates another known bend restrictor segment 300. The bend restrictor segment 300 is similar to the bend restrictor segment 200 of fig. 2 but the two halves of the bend restrictor segment 300 are connected differently. In this example, each half includes corresponding teeth 302 that interlock when the two halves are brought together. A bolt 304 is provided on either side of the bend restrictor segment 300 and each bolt 304 extends through a hole in two teeth of each half, thereby securing the two halves together. With this example, the bolt has to be tightened from the neck side of the bend restrictor segment. Thus, the bend restrictor segments 300 must be assembled and the bolts tightened individually before an adjacent bend restrictor segment 300 can be added.

Fig. 4 illustrates a further known bend restrictor segment 400, which does not require any bolts. Instead of bolts, the two halves are held together by an adjacent bend restrictor. A special fitting is required at the end of a string of bend restrictor segments, so as to secure the bend restrictor segments in place at either end of the string of segments.

A problem with some known bend restrictor segments is that they each require a large number of components (e.g. two halves and associated bolts) to be held on a vessel prior to installation. Large numbers of components requires increased handling time and lost components can result in higher costs due to replacement or spare parts.

Another problem with known bend restrictor segments is that each segment has to be connected and the bolts secured in place before the next segment can be added. This can result in the installation process taking a long time thereby contributing to high installation costs.

It would be useful to provide a bend restrictor segment in which installation times and costs can be reduced.

GB2428760 A discloses a centraliser for a pipe or other elongate member.

GB2463940 A discloses a mechanical latch for preventing damage to a cable passing through an aperture.

US2015/159443 A1 discloses a cable support assembly.

WO2012/168702 discloses a contact damage protector for a marine riser.

GB2509123 A discloses a clamp for control umbilical and workstring for offshore oil well.

US2008/283687 A1 discloses a lined clamp for hoses and control lines.

### BRIEF SUMMARY OF THE DISCLOSURE

In accordance with a first aspect of the present invention there is provided a bend restrictor segment for defining a minimum radius of curvature of a portion of an elongate member according to claim 1, comprising:
a first body portion;
a further body portion;
wherein the first and further body portions are connectable to form an annular body; and
wherein the first body portion further comprises a fixing assembly on an outer circumferential edge of the first body portion, for connecting the first and further body portions together, the fixing assembly being integrally connected with the first body portion.

In accordance with the invention, each of the first body portion and further body portion further comprises a neck portion extending therefrom.

In accordance with the invention, each of the first and further body portions are configured to be located over a neck portion of a further bend restrictor segment to connect the bend restrictor segments together in series.

In accordance with the invention, the fixing assembly comprises a bolt rotatably connected at a first end region to the outer circumferential edge of the first body portion.

In accordance with the invention, the first end region of the bolt extends through a through-hole in a first bar, wherein the first bar is rotatable within a cavity formed in the outer circumferential edge.

In a preferred embodiment, the through-hole in the first bar is threaded, for threaded engagement with the first end region of the bolt.

In a preferred embodiment, the fixing assembly further comprises a further bar comprising a through-hole, wherein a further end region of the bolt extends through the through-hole of the further bar.

In a preferred embodiment, the further body portion comprises a cavity in an outer circumferential edge, the cavity configured to receive the further bar.

In a preferred embodiment, the first and further body portion are hinged together substantially opposite the fixing assembly, such that the first and further body portions can hinge between an open position and a closed position to form the annular body.

In a preferred embodiment, the bend restrictor segment further comprises a further fixing assembly on an outer circumferential edge of the first or further body portion, for connecting the first and further body portions together, the fixing assembly being integrally connected with the first or further body portion at a position substantially opposite the first fixing assembly.

In accordance with a second aspect of the present invention there is provided a kit of parts comprising a plurality of bend restrictor segments according to the first aspect.

In accordance with a third aspect of the present invention there is provided an assembly comprising a plurality of bend restrictor segments according to the first aspect, each of the plurality of bend restrictor segments connected together in series, and an elongate element, the plurality of connected bend restrictor elements extending around the elongate element.

In accordance with a fourth aspect of the present invention there is provided a method of manufacturing a bend restrictor segment for defining a minimum radius of curvature of a portion of an elongate member, according to claim 9, the method comprising:
forming a first body portion;
forming a further body portion;
wherein the first and further body portions are connectable to form an annular body;
wherein each of the first body portion and further body portion further comprises a neck portion extending therefrom, wherein each of the first and further body portions are configured to be located over a neck portion of a further bend restrictor segment to connect the bend restrictor segments together in series, and
integrally connecting a fixing assembly on an outer circumferential edge of the first body portion, for connecting the first and further body portions together, wherein the fixing assembly comprises a bolt rotatably connected at a first end region to the outer circumferential edge of the first body portion, and wherein the first end region of the bolt extends through a through-hole in a first bar, wherein the first bar is rotatable within a cavity formed in the outer circumferential edge.

Certain embodiments provide a bend restrictor segment that is of fewer parts than the known bend restrictor segments. Thus, assembly is made relatively easier and simpler for an engineer.

Certain embodiments provide bend restrictor segments that can be assembled with unfettered access to fixing points, thereby allowing the assembly process to be faster and easier than previous methods.

### BRIEF DESCRIPTION OF THE DRAWINGS

Embodiments of the invention are further described hereinafter with reference to the accompanying drawings, in which:
Figure 1 illustrates an underwater cable installation;
Figure 2 illustrates a known bend restrictor segment;
Figure 3 illustrates a further known bend restrictor segment;
Figure 4 illustrates a yet further known bend restrictor segment;
Figure 5a illustrates a front view of an example of a bend restrictor segment;
Figure 5b illustrates a side view of the bend restrictor element segment of Figure 5a;
Figure 5c illustrates a section view through line B-B of the bend restrictor segment of Figure 5b;
Figure 6a illustrates a front view of the bend restrictor segment of Figures 5a to 5c, in a closed configuration;
Figure 6b illustrates a side view of the bend restrictor segment of Figure 6a;
Figure 6c illustrates a section view through line A-A of the bend restrictor segment of Figure 6b;
Figure 7 illustrates a perspective view of the bend restrictor segment of Figures 5a to 6c in a closed configuration;
Figure 8 illustrates a further perspective view of the bend restrictor segment of Figures 5a to 6c, in an open configuration;
Figures 9 and 10 illustrate a yet further perspective views of the bend restrictor segment of Figures 5a to 6c, in a closed configuration;
Figure 11 illustrates a plurality of bend restrictor segments connected together in series;
Figure 12 illustrates a close up of a portion, C, of Figure 11;
Figure 13 illustrates a perspective view of a plurality of bend restrictor segments connected together in series;
Figure 14 illustrates another bend restrictor segment; and
Figure 15 illustrates another plurality of bend restrictor segments.

### DETAILED DESCRIPTION

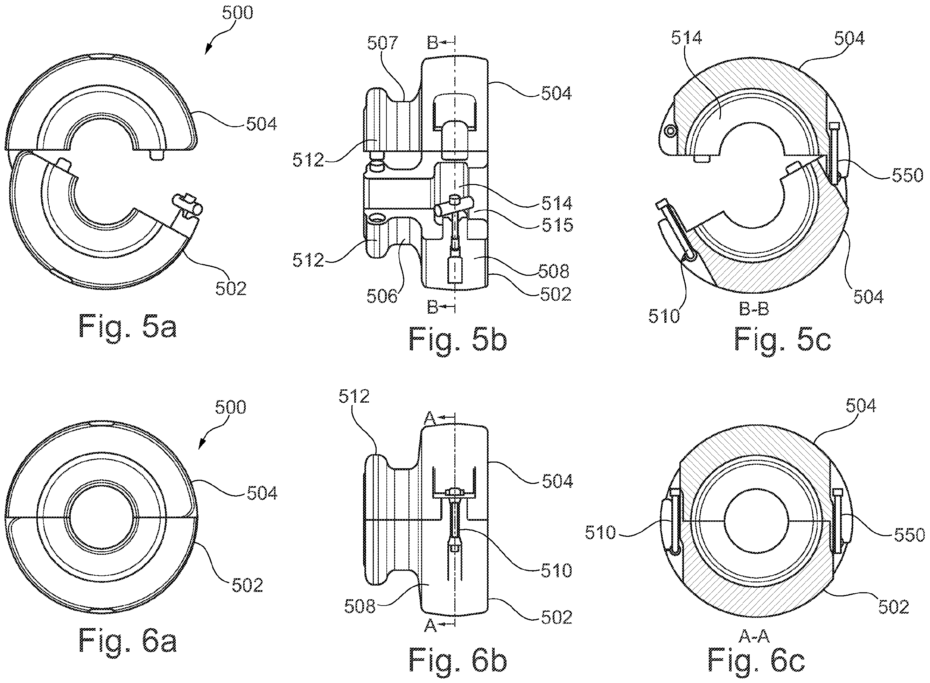

Referring now to the drawings, figs. 5a to 5c illustrates a bend restrictor segment 500 in an open configuration, and figs. 6a to 6c illustrate the same bend restrictor segment 500 in a closed configuration.

The bend restrictor segment 500 includes a first body portion 502, and a further body portion 504. As shown in fig. 6a, the first and further body portions 502, 504 are connectable to form an annular body. Thus, an elongate member may be placed between the first and further body portions 502, 504 when the body portions are in an open configuration and then the first and further body portions 502, 504 may be connected together around the elongate member (over the outer surface of the elongate member).

In this example, each of the first and further body portions 502, 504 are substantially semi-annular (or equal halves). In other examples, one of the first or further body portions 502, 504 may be larger than the other, so that together they form a complete annular body.

Each of the first and further body portions 502, 504 includes a neck portion 506, 507 extending from therefrom. The neck portion 506, 507 extends from the body portion 502, 504 in a substantially axial direction (as best seen in figs. 5b and 6b). Each neck portion 506, 507 includes an annular flange 512 at an end distal from the body portion 502, 504. Each body portion 502, 504, includes a corresponding annular groove 514 and flange 515 on an inner circumferential edge thereof.

When adjacent bend restrictor segments 500 are connected together in series, the annular groove 514 of a first bend restrictor segment 500 extends over and cooperates with a flange 512 of an adjacent bend restrictor segment 500 and the flange 515 on the inner surface of the first bend restrictor segment 500 extends over the neck portion of the adjacent bend restrictor segment 500 to thereby connect adjacent bend restrictor segments together.

Each of the first and further body portions 502, 504 may be formed from any suitable material as known in the art. For example, the first and further body portions 502, 504 may be formed from PU, steel, HDPE, PE, PA, PEEK rubber, or filled polymers. The inner and outer diameters of the annular body will depend on the elongate member for which the bend restrictor segment is intended to be used, and can be readily selected by those skilled in the art. Typically, the outer diameter of the bend restrictor segment may be from 200 mm up to 1 m, for example.

The first body portion 502 further includes a fixing assembly 510 on an outer circumferential edge 508 of the first body portion 502 for connecting the first and further body portions 502, 504 together. The fixing assembly 510 is integrally connected with the first body portion 502. That is, the fixing assembly 510 is pre-installed in the first body portion 502 so that the fixing assembly and first body portion are connected as a single component. Thus the fixing assembly and body portion are operably connected.

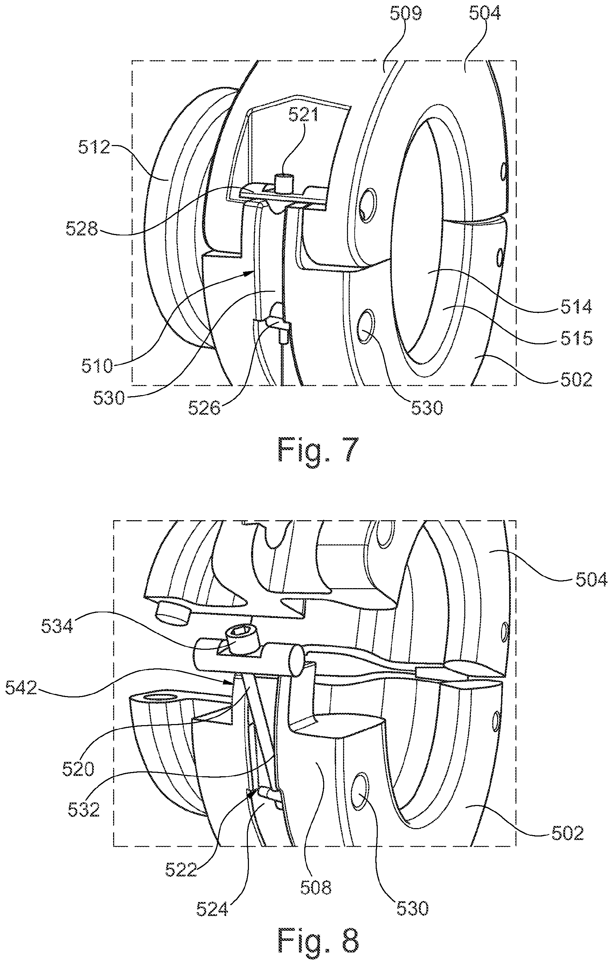

As best illustrated in figs. 7 to 10, the fixing assembly 510 includes a bolt 520 (or socket head cap screw, SHCS fitting) rotatably connected at a first end region 522 to the outer circumferential edge 508 of the first body portion 502.

As used herein, the term "outer circumferential edge" is not limited specifically to the actual outer edge of the body portion. Rather, it may also encompass a region or surface that is visible or accessible from the outer circumferential edge of the body portion. For example, as shown in figs. 7 and 8, the fixing assembly is connected within a cavity 524 in the outer circumferential edge 508 of the first body portion 502. The annular body can be said to have an inner surface (for overlying part of another segment or the elongate element), and an outer surface. The outer surface includes and outer circumferential edge (co-axial with the elongate member) and two side edges that will abut further annular bodies of further segments when joined in series in use.

In this example, the fixing assembly 510 includes a first bar 526. The first bar is provided in a cavity of hole 530 that extends axially (i.e. parallel to a central longitudinal axis of the annular body) and crosses the cavity 524 housing the bolt 520. The first bar 526 is rotatable within the cavity 524. In this case the cavity 530 extends to the outer surface side edges of the first body portion 502.

The first end region 522 of the bolt 520 extends through a through-hole 532 in the first bar 526. The through-hole 532 in the first bar 526 is substantially perpendicular to the central longitudinal axis of the first bar 526. Thus, when the first bar 526 rotates within the cavity 530, the bolt 520 rotates about the axis of the first bar 526. In this example, the cavity 524 allows the bolt 520 to rotate even if the end region of the bolt 520 protrudes beyond the through-hole 532 of the first bar 526.

The through-hole 532 in the first bar 526 is aptly threaded for threaded engagement with the first end region of the bolt 520. In this example, at least the first end region of the bolt 520 is also threaded, so as to cooperate with the threaded through-hole 532.

The fixing assembly also includes a further bar 528. The further bar 528 includes a through-hole 534, through which a further end region 542 of the bolt 520 extends. In this example, the through-hole 534 extends through the further bar 528 so that the further bar 528 lays substantially perpendicular to the axis of the bolt 520. The through-hole 534 and the further end region of the bolt 520 are unthreaded to allow free movement of the further bar 528 with respect to the bolt.

Each of the components of the fixing assembly 510 (the bolt 520 and the first and further bars 526, 528) may be manufactured from materials including super duplex (a stainless steel), titanium, or a stainless steel, for example. Other materials may also be suitable, depending on the intended environment for use (including strength requirements or corrosion) and may be readily selected by those skilled in the art.

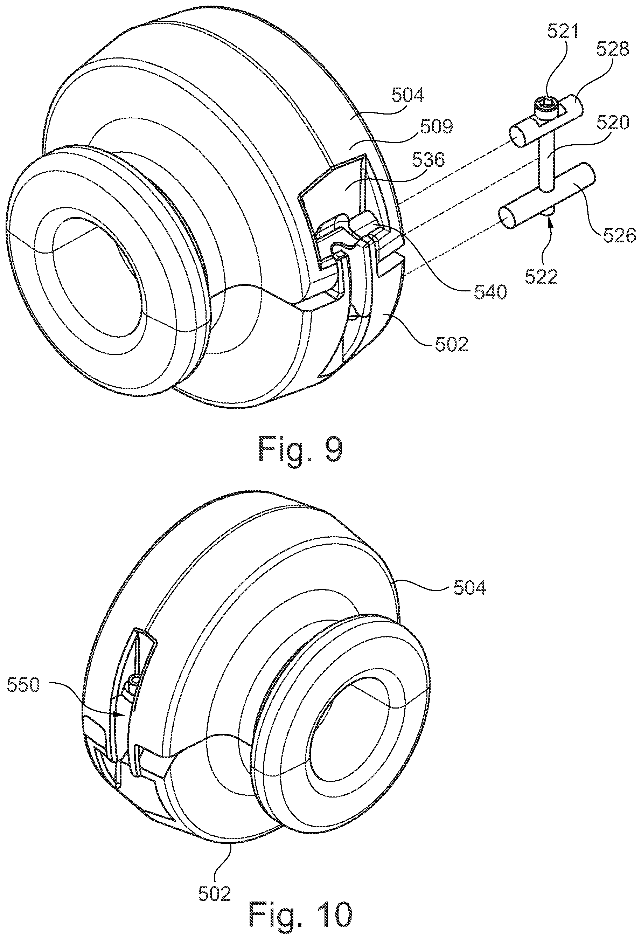

As shown most clearly in figs. 7 and 9, the further body portion 504 includes a cavity 536 in an outer circumferential edge 509. The cavity 536 is shaped or configured to receive the further bar 528 of the fixing assembly 510. As shown in fig. 9, the cavity 536 is formed by a depression in the outer circumferential surface 509 of the further body portion 504. The depression is sized and configured to receive the further bar 528 and a head portion 521 of the bolt. An edge of the cavity 536 includes an axially extending recess 540 sized and shaped to receive the further bar 528. In other words, the edge of the cavity is shaped to cup the further bar 528. Aptly the recess 540 is deep enough to encompass around a quarter of the circumference of the further bar 528, as shown in fig. 7. More aptly the recess may be deep enough to encompass at least half of the circumference of the further bar. In this way, the further bar 528 can be securely held within the recess 540.

The bolt 520 includes the head portion 521, which can be used to tighten or loosen the bolt (by screwing the first end region of the bolt further into or out of the first bar 526). The head portion is an end of the bolt, aptly wider than the rest, to allow a user to grasp and move the bolt. In other examples, the bolt 520 may include a different shaped head, for example a hexagonal head, or a cross head.

To assemble the bend restrictor segment around an elongate member, the first and further body portions 502, 504 are placed in an open position (as shown in figs. 5a to 5c and 8). In the open position, the bolt 520 of the fixing assembly is loosely screwed into the through-hole 532 of the first bar 526, and is hinged outwardly to allow space to insert the elongate member. That is, in the open position the first and further body portions 502, 504 are spaced apart so that an elongate element fits through a gap between the first and further body portions 502, 504. In the open position an elongate member can be inserted between the first and further body portions 502, 504 (or alternatively the first and further body portions 502, 504 may be placed around the elongate member). Once the elongate member is in position between the first and further body portions 502, 504, the first and further body portions 502, 504 can be brought together to form an annular body around the elongate member.

The bolt 520 and further bar 528 may then be rotated towards the further body portion 504 until the further bar 528 is received in the recess 540 of the cavity 536. The bolt 520 may then be screwed further into the through-hole 532 of the first bar 526 using an allen key or other suitable tool to rotate the head portion 521.

After tightening of the bolt 520, the further bar 528 is secured in position in the recess 540 of the further body portion 504. Thus, the first and further body portions 502, 504 can be securely connected together.

The first and further body portions 502, 504 are also connected together at a second position. In this example, the first and further body portions 502, 504 are hinged together substantially opposite the fixing assembly 510, so that the first and further body portions 502, 504 can hinge between the open position and the closed position to form the annular body.

In this example, a hinging mechanism 550 is provided substantially opposite the fixing mechanism 510 to hinge together the first and further body portions 502, 504. The hinging mechanism 550 in this example includes a fixing assembly substantially the same as the fixing assembly 510. However, the fixing assembly forming the hinging mechanism 550 is pre-installed and tightened into position. The first and further body portions are able to rotate about the first and further bars of the hinging mechanism 550.

In another example, rather than a hinging mechanism 550, a further fixing assembly may be provided substantially opposite the first fixing assembly 510. The further fixing assembly may be substantially the same as the first fixing assembly 510 and may be provided on the outer circumferential edge of either of the first or further body portions 502, 504 and integrally connected with the first or further body portions 502, 504.

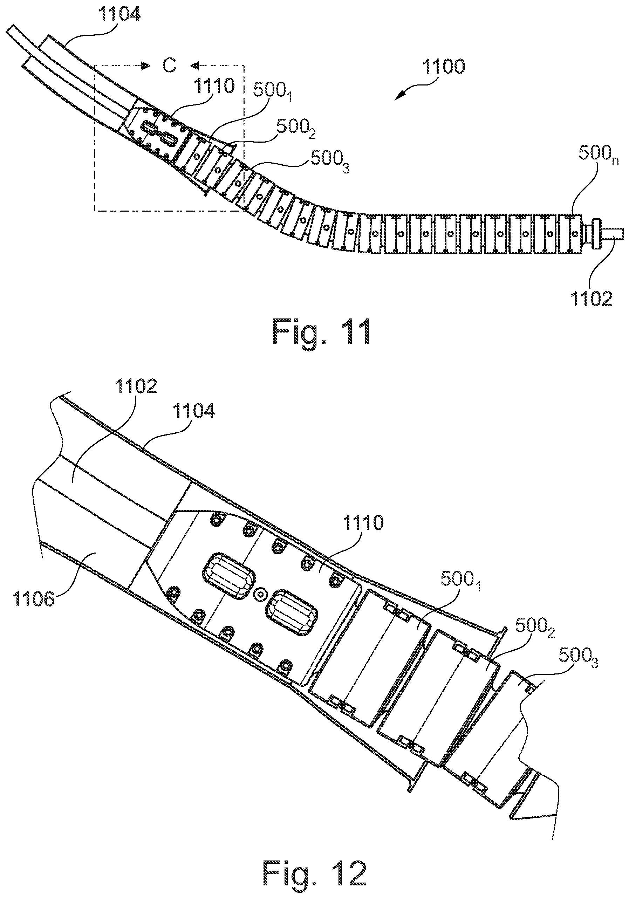

Fig. 11 illustrates an assembly 1100 including a plurality of bend restrictor segments 500₁₋ₙ connected together in series around an elongate element 1102.

As shown, each of the bend restrictor segments 500₁₋ₙ are connected to an adjacent bend restrictor segment by locating the body portion of a first bend restrictor segment over the neck portion of an adjacent bend restrictor segment.

The interlocking of the body portion with an adjacent neck portion allows a predetermined degree of movement between adjacent bend restrictor segments (as shown more clearly in fig. 12). This method of interlocking adjacent bend restrictor segments to define a minimum radius of curvature of an elongate member, is known in the art, so for brevity will not be described in detail.

As shown in fig. 11, at a first end of the series of bend restrictor segments, a centraliser 1110 is provided to seal an annulus 1106 between a J-tube 1104 and the elongate member 1102.

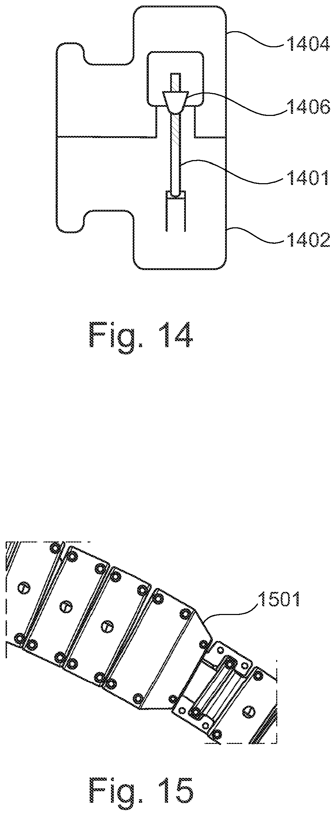

Although the specific bend restrictor segments 500 described above include a neck and body portion to allow connection of adjacent bend restrictor segments, the bend restrictor segments may be differently configured to be connected to adjacent bend restrictor segments. For example, adjacent segments may be connected together via an adapter piece 1501. An adapter piece 1501 may be used to transition between different diameter bend restrictor segments (as shown in fig. 15).

Rather than the fixing assembly described above with a bolt and bars, another fixing assembly may include a bolt 401, pivotally attached to a first body portion 1402, and a head portion 1406 threaded to the bolt (fig. 14). The head portion may be cupped by a corresponding cavity in the further body portion 1404.

Alternatively, the fixing assembly may include a clasp arrangement with a clasp on an outer circumferential surface of a first body portion and a receiving groove in the further body portion.

Although the hinging mechanism described above includes a further fixing assembly, alternative hinging mechanisms (e.g. a piano hinge) may also be suitable.

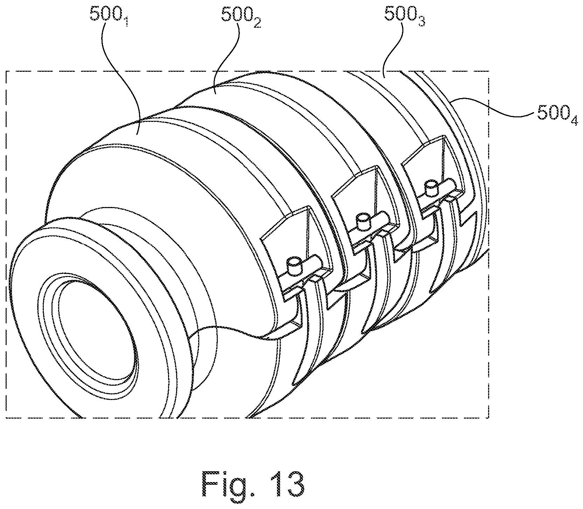

Fig. 13 illustrates a plurality of bend restrictor segments 500₁₋₄ connected together in series. As shown, both before and after assembly, the fixing assemblies 510 of each of the bend restrictor segments 500 are accessible for tightening or loosening the bolts 520. Thus, the fixing assemblies may be tightened at any stage during installation. There is no need to individually position connect, and fasten each of the bend restrictor segments before the next adjacent segment can be added.

For example, an entire string of bend restrictor segments can be assembled around the elongate member prior to tensioning of the fixing assemblies. This allows, for example, a first team to continue to continually align and install successive bend restrictor segments along the length of the elongate member, whilst a second team follow the first team tensioning the bolt of the assembled bend restrictor segments. This can result in reduced installation times since successive bend restrictor segments can be added simultaneously to previous bend restrictor segments being tightened into position.

With the above described arrangement, each bend restrictor segment may be supplied as a single piece, avoiding the requirement for separate fixings or bolts. Thus, numerous loose parts are not needed to be kept safely before installation. Also the costs associated with handling times during installation and spare or replacement parts are reduced compared with known methods.

With the above arrangement, the fixing is accessed from an outer circumferential surface only. So, no fixing stage is required that necessitates access to a side surface of the segment (i.e. requiring separate fixing of each segment prior to adding of a further segment). Instead, all fixings may be accessed at any time, and optionally at the same time.

With the above described arrangement each of the first and further body portions can be shaped identically or near identically. The fixing assembly (and optionally the hinge assembly) can be fixed to the respective body portions after they are formed. Thus, costs of tooling to manufacture the body portions can be reduced since each portion can be identical, so only one set up of tooling is required for manufacture.

The fixing assembly of the above described bend restrictor segments may distribute the load across a larger surface area (across the length of the first and further bars) than traditional bolt and washer assemblies (such as that shown in fig. 2). In particular, each bar spreads load from the bolt across the cavity surface of each segment. Thus the fixing assembly described above is less likely to damage the first and further body portions and is less likely to fail under excessive loads than known fixing assemblies.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A bend restrictor segment (500) for defining a minimum radius of curvature of a portion of an elongate member, comprising:
a first body portion (502);
a further body portion (504);
wherein the first and further body portions (502, 504) are connectable to form an annular body, wherein each of the first body portion (502) and further body portion (504) further comprises a neck portion (506, 507) extending therefrom, wherein each of the first and further body portions (502, 504) are configured to be located over a neck portion of a further bend restrictor segment to connect the bend restrictor segments together in series,
wherein the first body portion (502) further comprises a fixing assembly (510) on an outer circumferential edge (508) of the first body portion (502), for connecting the first and further body portions (502, 504) together, the fixing assembly (510) being integrally connected with the first body portion (502), **characterised in that** the fixing assembly (510) comprises a bolt (520) rotatably connected at a first end region (522) to the outer circumferential edge (508) of the first body portion (502), and wherein the first end region (522) of the bolt (520) extends through a through-hole (532) in a first bar (526), wherein the first bar (526) is rotatable within a cavity (524) formed in the outer circumferential edge (508).

2. A bend restrictor segment (500) according to claim 1, wherein the through-hole (532) in the first bar (526) is threaded, for threaded engagement with the first end region (522) of the bolt (520).

3. A bend restrictor segment (500) according to claim 2, wherein the fixing assembly (510) further comprises a further bar (528) comprising a through-hole (532), wherein a further end region (542) of the bolt (520) extends through the through-hole (532) of the further bar (528).

4. A bend restrictor segment (500) according to claim 3, wherein the further body portion (504) comprises a cavity (536) in an outer circumferential edge (509), the cavity (536) configured to receive the further bar (528).

5. A bend restrictor segment (500) according to any preceding claim, wherein the first and further body portion (502, 504) are hinged together substantially opposite the fixing assembly (510), such that the first and further body portions (502, 504) can hinge between an open position and a closed position to form the annular body.

6. A bend restrictor segment (500) according to any of claims 1 to 5, further comprising a further fixing assembly on an outer circumferential edge of the first or further body portion (502, 504), for connecting the first and further body portions together, the fixing assembly being integrally connected with the first or further body portion at a position substantially opposite the first fixing assembly (510).

7. A kit of parts comprising a plurality of bend restrictor segments according to any of claims 1 to 6.

8. An assembly comprising a plurality of bend restrictor segments according to any of claims 1 to 6, each of the plurality of bend restrictor segments connected together in series, and an elongate element, the plurality of connected bend restrictor elements extending around the elongate element.

9. A method of manufacturing a bend restrictor segment (500) for defining a minimum radius of curvature of a portion of an elongate member, comprising:
forming a first body portion (502);
forming a further body portion (504);
wherein the first and further body portions (502, 504) are connectable to form an annular body, wherein each of the first body portion and further body portion (502, 504) further comprises a neck portion (506, 507) extending therefrom, wherein each of the first and further body portions (502, 504) are configured to be located over a neck portion of a further bend restrictor segment to connect the bend restrictor segments together in series; and
integrally connecting a fixing assembly (510) on an outer circumferential edge (508) of the first body portion (502), for connecting the first and further body portions (502, 504) together, **characterised in that** the fixing assembly (510) comprises a bolt (520) rotatably connected at a first end region (522) to the outer circumferential edge (508) of the first body portion (502), and wherein the first end region (522) of the bolt (520) extends through a through-hole (532) in a first bar (526), wherein the first bar (526) is rotatable within a cavity (524) formed in the outer circumferential edge (508).

## Patentansprüche

1. Biegebeschränkungssegment (500) zum Definieren eines minimalen Krümmungsradius eines Abschnitts eines länglichen Teils, umfassend:
einen ersten Körperabschnitt (502);
einen weiteren Körperabschnitt (504);
wobei der erste und der weitere Körperabschnitt (502, 504) verbunden werden können, um einen ringförmigen Körper zu bilden, wobei jeder von dem ersten Körperabschnitt (502) und dem weiteren Körperabschnitt (504) ferner einen Halsabschnitt (506, 507) umfasst, der sich davon erstreckt, wobei jeder von dem ersten und dem weiteren Körperabschnitt (502, 504) konfiguriert sind, um sich über einem Halsabschnitt eines weiteren Biegebeschränkungssegments zu befinden, um die Biegebeschränkungssegmente in Reihe miteinander zu verbinden,
wobei der erste Körperabschnitt (502) ferner eine Befestigungsanordnung (510) an einem äußeren Umfangsrand (508) des ersten Körperabschnitts (502) umfasst, um den ersten und den weiteren Körperabschnitt (502, 504) miteinander zu verbinden, wobei die Befestigungsanordnung (510) integral mit dem ersten Körperabschnitt (502) verbunden ist, **dadurch gekennzeichnet, dass** die Befestigungsanordnung (510) einen Bolzen (520) umfasst, der an einem ersten Endbereich (522) drehbar mit dem äußeren Umfangsrand (508) des ersten Körperabschnitts (502) verbunden ist, und wobei sich der erste Endbereich (522) des Bolzens (520) durch ein Durchgangsloch (532) in einer ersten Stange (526) erstreckt, wobei die erste Stange (526) innerhalb eines Hohlraums (524) drehbar ist, der in dem äußeren Umfangsrand (508) gebildet ist.

2. Biegebeschränkungssegment (500) nach Anspruch 1, wobei das Durchgangsloch (532) in der ersten Stange (526) für einen Gewindeeingriff mit dem ersten Endbereich (522) des Bolzens (520) mit einem Gewinde versehen ist.

3. Biegebeschränkungssegment (500) nach Anspruch 2, wobei die Befestigungsanordnung (510) ferner eine weitere Stange (528) umfasst, umfassend ein Durchgangsloch (532), wobei sich ein weiterer Endbereich (542) des Bolzens (520) durch das Durchgangsloch (532) der weiteren Stange (528) erstreckt.

4. Biegebeschränkungssegment (500) nach Anspruch 3, wobei der weitere Körperabschnitt (504) einen Hohlraum (536) in einem äußeren Umfangsrand (509) umfasst, wobei der Hohlraum (536) konfiguriert ist, um die weitere Stange (528) aufzunehmen.

5. Biegebeschränkungssegment (500) nach einem der vorherigen Ansprüche, wobei der erste und der weitere Körperabschnitt (502, 504) im Wesentlichen gegenüber der Befestigungsanordnung (510) gelenkig miteinander verbunden sind, sodass der erste und die weiteren Körperabschnitte (502, 504) zwischen einer offenen Position und einer geschlossenen Position gelenkig verbunden sein können, um den ringförmigen Körper zu bilden.

6. Biegebeschränkungssegment (500) nach einem der Ansprüche 1 bis 5, ferner umfassend eine weitere Befestigungsanordnung an einem äußeren Umfangsrand des ersten oder weiteren Körperabschnitts (502, 504), um den ersten und die weiteren Körperabschnitte miteinander zu verbinden, wobei die Befestigungsanordnung an einer Position im Wesentlichen gegenüber der ersten Befestigungsanordnung (510) integral mit dem ersten oder weiteren Körperabschnitt verbunden ist.

7. Teilekit, umfassend eine Vielzahl von Biegebeschränkungssegmenten nach einem der Ansprüche 1 bis 6.

8. Anordnung, umfassend eine Vielzahl von Biegebeschränkungssegmenten nach einem der
Ansprüche 1 bis 6, wobei jedes der Vielzahl Biegebeschränkungssegmenten in Reihe miteinander verbunden ist, und ein längliches Element, wobei sich die Vielzahl von verbundenen Biegebegrenzungselementen um das längliche Element erstreckt.

9. Verfahren zur Herstellung eines Biegebeschränkungssegments (500) zum Definieren eines minimalen Krümmungsradius eines Abschnitts eines länglichen Teils, umfassend:
Bilden eines ersten Körperabschnitts (502);
Bilden eines weiteren Körperabschnitts (504);
wobei der erste und der weitere Körperabschnitt (502, 504) verbunden werden können, um einen ringförmigen Körper zu bilden, wobei jeder von dem ersten Körperabschnitt und dem weiteren Körperabschnitt (502, 504) ferner einen sich davon erstreckenden Halsabschnitt (506, 507) umfasst, wobei jeder von dem ersten und dem weiteren Körperabschnitt (502, 504) konfiguriert ist, um sich über einem Halsabschnitt eines weiteren Biegebeschränkungssegments zu befinden, um die Biegebeschränkungssegmente in Reihe miteinander zu verbinden; und
integrales Verbinden einer Befestigungsanordnung (510) an einem äußeren Umfangsrand (508) des ersten Körperabschnitts (502), um den ersten und den weiteren Körperabschnitt (502, 504) miteinander zu verbinden, **dadurch gekennzeichnet, dass**
die Befestigungsanordnung (510) einen Bolzen (520) umfasst, der an einem ersten Endbereich (522) drehbar mit dem äußeren Umfangsrand (508) des ersten Körperabschnitts (502) verbunden ist, und wobei sich der erste Endbereich (522) des Bolzens (520) durch ein Durchgangsloch (532) in einer ersten Stange (526) erstreckt, wobei die erste Stange (526) innerhalb eines Hohlraums (524) drehbar ist, der in dem äußeren Umfangsrand (508) gebildet ist.

## Revendications

1. Segment restricteur de courbure (500) destiné à définir un rayon de courbure minimal d'une partie d'un élément allongé, comprenant :
une première partie de corps (502) ;
une partie de corps supplémentaire (504) ;
lesdites parties de corps première et supplémentaire (502, 504) pouvant être reliées pour former un corps annulaire, chacune de la première partie de corps (502) et de la partie de corps supplémentaire (504) comprenant en outre une partie de col (506, 507) s'étendant à partir de celles-ci, chacune des parties de corps première et supplémentaire (502, 504) étant conçue pour être située sur une partie de col d'un segment restricteur de courbure supplémentaire pour relier les segments restricteur de courbure ensemble en série, ladite première partie de corps (502) comprenant en outre un ensemble de fixation (510) sur un bord circonférentiel externe (508) de la première partie de corps (502), pour relier ensemble les parties de corps première et supplémentaire (502, 504), l'ensemble de fixation (510) étant intégralement relié au premier corps (502), **caractérisé en ce que** l'ensemble de fixation (510) comprend un boulon (520) relié de manière rotative au niveau d'une première zone d'extrémité (522) au bord circonférentiel externe (508) de la première partie de corps (502), et ladite première zone d'extrémité (522) du boulon (520) s'étendant à travers un trou traversant (532) dans une première barre (526), ladite première barre (526) pouvant tourner dans une cavité (524) formée dans le bord circonférentiel externe (508).

2. Segment restricteur de courbure (500) selon la revendication 1, ledit trou traversant (532) dans la première barre (526) étant fileté, pour une mise en prise par filetage avec la première zone d'extrémité (522) du boulon (520).

3. Segment restricteur de courbure (500) selon la revendication 2, ledit ensemble de fixation (510) comprenant en outre une barre supplémentaire (528) comprenant un trou traversant (532), une zone d'extrémité supplémentaire (542) du boulon (520) s'étendant à travers le trou traversant (532) de la barre supplémentaire (528).

4. Segment restricteur de courbure (500) selon la revendication 3, ladite partie de corps supplémentaire (504) comprenant une cavité (536) dans un bord circonférentiel externe (509), la cavité (536) étant conçue pour recevoir la barre supplémentaire (528).

5. Segment restricteur de courbure (500) selon une quelconque revendication précédente, lesdites parties de corps première et supplémentaire (502, 504) étant articulées ensemble sensiblement à l'opposé de l'ensemble de fixation (510), de sorte que les parties de corps première et supplémentaire (502, 504) puissent s'articuler entre une position ouverte et une position fermée pour former le corps annulaire.

6. Segment restricteur de courbure (500) selon l'une quelconque des revendications 1 à 5, comprenant en outre un ensemble de fixation supplémentaire sur un bord circonférentiel externe de la partie de corps première ou supplémentaire (502, 504), pour relier ensemble les parties de corps première et supplémentaire, l'ensemble de fixation étant intégralement relié à la partie de corps première ou supplémentaire au niveau d'une position sensiblement opposée au premier ensemble de fixation (510).

7. Kit de pièces comprenant une pluralité de segments restricteurs de courbure selon l'une quelconque des revendications 1 à 6.

8. Ensemble comprenant une pluralité de segments restricteurs de courbure selon l'une quelconque des
revendications 1 à 6, chacun de la pluralité de segments restricteurs de courbure étant relié ensemble en série, et un élément allongé, la pluralité d'éléments restricteurs de courbure reliés s'étendant autour de l'élément allongé.

9. Procédé de fabrication d'un segment restricteur de courbure (500) destiné à définir un rayon de courbure minimal d'une partie d'un élément allongé, comprenant :
la formation d'une première partie de corps (502) ;
la formation d'une partie de corps supplémentaire (504) ;
lesdites parties de corps première et supplémentaire (502, 504) pouvant être reliées pour former un corps annulaire, chacune des parties de corps première et supplémentaire (502, 504) comprenant en outre une partie de col (506, 507) s'étendant à partir de celle-ci, chacune des parties de corps première et supplémentaire (502, 504) étant conçue pour être située sur une partie de col d'un segment restricteur de courbure supplémentaire pour relier les segments restricteurs de courbure ensemble en série ; et
la liaison intégral d'un ensemble de fixation (510) sur un bord circonférentiel externe (508) de la première partie de corps (502), pour relier ensemble les parties de corps première et supplémentaire (502, 504), **caractérisé en ce que**
l'ensemble de fixation (510) comprend un boulon (520) relié de manière rotative au niveau d'une première zone d'extrémité (522) au bord circonférentiel externe (508) de la première partie de corps (502), et ladite première zone d'extrémité (522) du boulon (520) s'étendant à travers un trou traversant (532) dans une première barre (526), ladite première barre (526) pouvant tourner dans une cavité (524) formée dans le bord circonférentiel externe (508).
